Europäisches Patentamt

European Patent Office

Office européen des brevets

(11) Numéro de publication: **0 176 420
B1**

# FASCICULE DE BREVET EUROPEEN

(45) Date de publication du fascicule du brevet:
**20.04.88**

(51) Int. Cl.⁴: **B 01 D 45/08,** F 22 B 37/30

(21) Numéro de dépôt: **85401747.2**

(22) Date de dépôt: **06.09.85**

(54) Dispositif de séparation d'eau et de vapeur pour le séchage d'une vapeur humide.

(30) Priorité: **17.09.84 FR 8414212**

(43) Date de publication de la demande:
**02.04.86 Bulletin 86/14**

(45) Mention de la délivrance du brevet:
**20.04.88 Bulletin 88/16**

(84) Etats contractants désignés:
**BE CH DE IT LI SE**

(56) Documents cités:
**DE - C - 967 766
FR - A - 2 428 787
US - A - 1 928 706
US - A - 2 276 277
US - A - 3 751 886**

(73) Titulaire: **FRAMATOME ET CIE., Tour Fiat 1, Place de la Coupole, F-92400 Courbevoie (FR)**

(72) Inventeur: **Sundheimer, Patrick, 20 rue de Bourgogne, F-94100 Saint-Maur-Des-Fosses (FR)**

(74) Mandataire: **Moncheny, Michel, c/o Cabinet Lavoix 2 Place d'Estienne d'Orves, F-75441 Paris Cedex 09 (FR)**

ACTORUM AG

## Description

L'invention concerne un dispositif de séparation d'eau et de vapeur pour le séchage d'une vapeur humide et, en particulier, un dispositif sécheur disposé sur la sortie de la vapeur dans la partie supérieure d'un générateur de vapeur d'un réacteur nucléaire à eau sous pression.

Dans les centrales nucléaires comportant un réacteur à eau sous pression, la vapeur produite dans les générateurs de vapeur présente un taux d'humidité relativement faible mais cependant excessif pour ce que cette vapeur puisse être utilisée dans les turbines, sans séchage intermédiaire.

Les générateurs de vapeur des réacteurs nucléaires à eau sous pression comportent donc, dans leur partie supérieure sur le trajet de sortie de la vapeur, des dispositifs de séchage qui sont de deux types et disposés successivement sur le trajet de la vapeur. Tout d'abord, la vapeur pénètre dans des séparateurs centrifuges où elle est entraînée en rotation dans une hélice, les gouttelettes d'eau contenues dans la vapeur se séparant de celle-ci par effet centrifuge avant d'être piégées sur une paroi cylindrique qui assure le retour de l'eau par gravité dans la zone d'alimentation du générateur de vapeur.

A la sortie des séparateurs centrifuges, la vapeur subit un second séchage, appelé séchage fin, dans des séparateurs à chicanes qui produisent des modifications successives brusques de la direction d'écoulement de la vapeur. Les séparateurs à chicanes connus, d'un très bon rendement, comportent des gouttières de direction verticale associées aux chicanes pour la récupération de l'eau séparée de la vapeur. Ces gouttières ont des sections droites dans des plans horizontaux de forme creuse, dont la concavité est dirigée vers le flux incident de la vapeur, si bien que les gouttelettes d'eau séparées de la vapeur sur les parois des chicanes sont arrêtées par les gouttières, collectées et dirigées par gravité vers la partie inférieure des séparateurs, puis vers la zone d'alimentation du générateur de vapeur, par l'intermédiaire de conduits de drainage.

Bien que ces gouttières augmentent de façon sensible l'efficacité des sécheurs à chicanes, elles présentent néanmois des inconvénients qui en rendent l'utilisation plus difficile.

Tout d'abord, ces gouttières interposées sur le trajet de la vapeur augmentent la perte de charge dans le sécheur. D'autre part, elles créent une zone où la vapeur est en surpression, juste en amont du film liquide constitué par les gouttelettes collectées dans les gouttières. Dans cette zone en surpression, le courant de vapeur et les gouttelettes d'eau ont d'autre part une vitesse pratiquement nulle, si bien qu'on se trouve en présence de particules d'eau en équilibre avec une vapeur en surpression. Ces conditions particulières ne favorisent pas l'élimination de l'eau par écoulement gravitaire.

En outre, le courant de vapeur est ascendant pendant toute la traversée des sécheurs qui sont disposés successivement les uns au-dessus des autres. Ce courant ascendant entraîne les gouttelettes d'eau vers le haut, dans les zones situées en amont des gouttières, à contre-courant du film de liquide, ce qui freine son écoulement gravitaire.

On a proposé, par exemple dans le FR-A-2.428.787, de réaliser les sécheurs à chicanes sous la forme d'ensembles constitués par un panneau vertical perforé avec lequel entre en contact le flux de vapeur incident qui débouche, après traversée du panneau perforé, dans une zone renfermant les chicanes et les gouttières de récuperation de l'eau. Le panneau perforé constituant la paroi d'entrée du sécheur crée une perte de charge sur l'écoulement de la vapeur et infléchit ce courant de vapeur vers le bas. On utilise, par exemple, comme panneau perforé d'entrée de la vapeur, une tôle comportant des perçages ayant une dimension et une répartition choisies pour modifier sensiblement l'écoulement de la vapeur sans augmenter trop la perte de charge. De tels dispositifs déflecteurs restent cependant d'une efficacité très limitée.

On a également proposé dans le FR-A-2.310.793 d'utiliser des panneaux constitués par un cadre dans lequel on a placé des séries de bandes parallèles inclinées vers le bas dans le sens d'écoulement de la vapeur du type persienne. De tels panneaux peuvent avoir une grande efficacité en ce qui concerne la déflection du flux de vapeur, mais leur réalisation est délicate, lorsqu'ils sont destinés à venir en contact avec une vapeur à très haute température circulant à très grande vitesse. Quel que soit le procédé de fabrication de ces panneaux, on ne peut garantir une très bonne résistance et une longue durée de vie.

Le but de l'invention est donc de proposer un dispositif de séparation d'eau et de vapeur pour le séchage d'une vapeur humide dont le courant d'arrivée au dispositif de séparation est ascendant, comprenant au moins un ensemble interposé sur le parcours de la vapeur constitué par des éléments de séchage et un panneau verticl perforé dont une face, ou face d'entrée, reçoit la vapeur humide qui débouche, après traversée du panneau perforé, dans une zone renfermant les éléments de séchage, comprenant des chicanes de déviation du flux de vapeur et des gouttières de récupération de l'eau séparée de la vapeur disposées verticalement et de façon que la section droite horizontale présente une partie creuse dirigée vers le flux incident de vapeur, dispositif qui soit d'une grande efficacité, simple de réalisation et d'une très grande résistance mécanique.

Ce but est atteint par un dispositif conforme à l'objet de la revendication 1.

Afin de bien faire comprendre l'invention, on va maintenant décrire, à titre d'exemple non limitatif, un dispositif de séparation d'eau et de vapeur suivant l'invention, utilisé pour le séchage de la vapeur humide produite par un générateur de vapeur d'un réacteur nucléaire à eau sous pression.

La Fig. 1 est une vue en coupe par un plan vertical de la partie supérieure renfermant les dispositifs sécheurs, d'un générateur de vapeur d'un réacteur nucléaire à eau sous pression;

la Fig. 2 est une vue en coupe par un plan vertical d'un ensemble de séchage d'un sécheur à chicane du générateur de vapeur représenté à la Fig. 1;

la Fig. 3 est une vue de face d'une partie de grille en métal déployée constituant la paroi d'entrée de l'ensemble de séchage représenté à la Fig. 2;

la Fig. 3A est une vue en coupe suivant A-A de la Fig. 3;

la Fig. 4 est une vue en coupe par un plan horizontal, d'une partie de la zone renfermant les éléments de séchage de l'ensemble représenté à la Fig. 2;

la Fig. 5 est une vue analogue à la Fig. 4, d'une variante de réalisation de la zone renfermant les éléments de séchage.

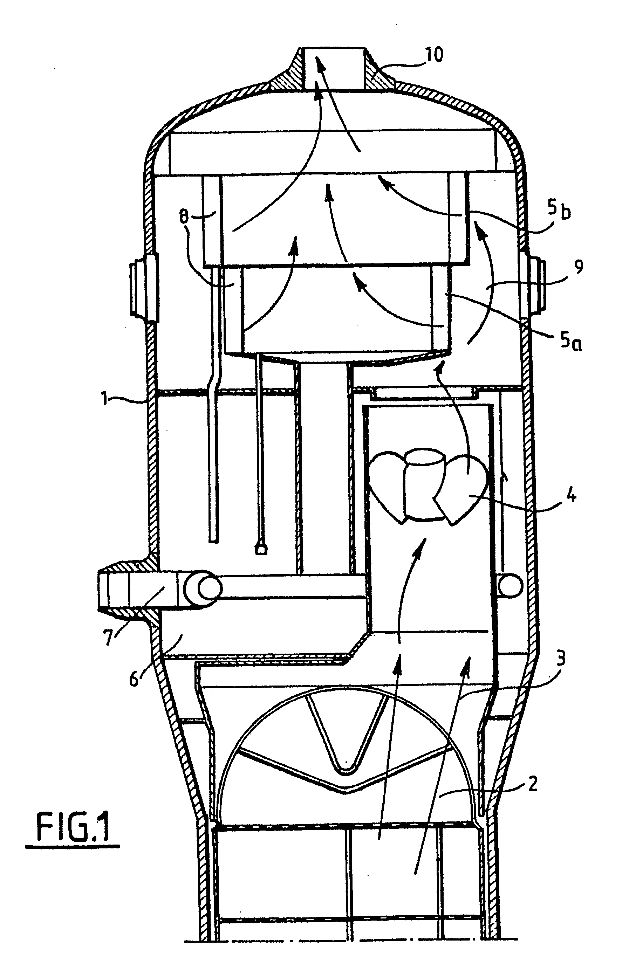

Sur la Fig. 1, on voit la partie supérieure d'un générateur de vapeur dont l'enveloppe externe 1 a un diamètre supérieur au diamètre de la partie inférieure du générateur de vapeur renfermant le faisceau dont on voit la partie supérieure 2 sur la Fig. 1.

Le faisceau est constitué par un ensemble de tubes à l'intérieur desquels circule l'eau sous pression venant de la cuve du réacteur nucléaire pour l'échauffement de l'eau d'alimentation du générateur de vapeur puis sa vaporisation, la vapeur produite pénétrant dans la partie supérieure 1 du générateur de vapeur suivant un parcours pratiquement vertical symbolisé par les flèches 3.

L'enveloppe 1 de la partie supérieure du générateur de vapeur renferme les séparateurs centrifuges tels que 4 et deux étages de sécheurs à chicanes 5a 5b, placés les uns au-dessus des autres. La vapeur sortant du faisceau pénètre tout d'abord dans les séparateurs centrifuges où son parcours devient hélicoïdal, une partie des gouttelettes d'eau transportées par la vapeur se déposant alors sur la paroi intérieure cylindrique des séparateurs centrifuges qui assure le retour de cette eau dans la zone 6 d'alimentation en eau du générateur de vapeur au niveau de laquelle est placé le tore d'alimentation 7 du générateur de vapeur assurant le retour de l'eau condensée à la sortie des turbines.

Au-dessus des séparateurs centrifuges 4 sont disposés deux étages de séparateurs à chicane 5a et 5b constitué chacun par quatre ensembles de séchage 8 disposés suivant les faces verticales d'un parallélépipède dont la disposition est centrale, à l'intérieur de l'enveloppe 1 de la partie supérieure des générateurs de vapeur.

La vapeur partiellement séchée venant des séparateurs centrifuges 4 arrive en contact avec la face d'entrée des éléments de séchage 8 en un courant ascendant de direction 9, traverse ces éléments de séchage 8 et sort du générateur de vapeur par la tubulaire 10 traversant l'enveloppe 1 à sa partie supérieure.

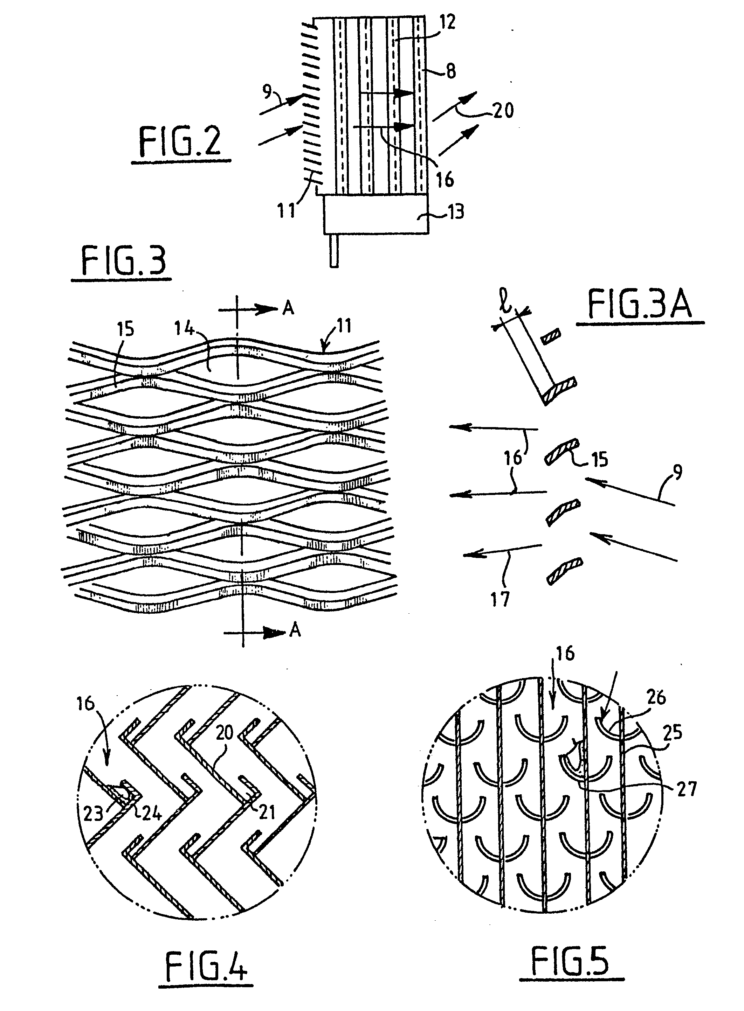

Sur la Fig. 2, on voit une section verticale, dans la direction de traversée de la vapeur, d'un élément de séchage 8, à plus grande échelle que sur la Fig. 1.

Cet élément 8 a une forme générale parallélépipédique et comporte une paroi d'entrée perforée 11, une zone de séchage 12 et un zone de récupération de l'eau 13.

Comme il est visible sur les Figs. 3 et 3a, le panneau 11 est constitué par une grille en métal déployé dont les cellules 14 sont en forme de losange et sont limitées par des lamelles 15 inclinées vers le bas dans le sens traversée de la vapeur.

Une telle grille en métal déployé est un produit connu en lui-même et peut être obtenu par découpage d'une tôle suivi d'un étirage au cours duquel les bandes de séparation des cellules découpées prennent une inclinaison identique par rapport au plan de la tôle, pour constituer des lamelles régulièrement réparties dans les plans de section droite de la tôle suivant les directions principales des cellules du réseau, comme il est visible sur la Fig. 3a.

La grille en métal déployée présente donc une structure à lamelles inclinées 15 comparables à la structure d'un panneau à lamelles inclinées du type persienne.

Une telle structure produit une déflection d'un courant de fluide passant au travers de ces cellules 14, comme il est visible sur la Fig. 3a, pour le flux incident de vapeur 9 dont la direction de déplacement 16 après traversée de la grille 11 est pratiquement horizontale. La grille est évidemment disposée de façon que les lamelles 15 soient inclinées vers le bas dans le sens de traversée du flux de vapeur.

L'amplitude de la déflection provoquée par la grille 11 dépend de plusieurs paramètres et, en particulier, de la largeur $\ell$ des bandes de métal comprises entre deux découpes de la tôle, appelées lanières, et de la dimension de la maille 14, aussi bien dans la direction longitudinale correspondant à la longeur des découpes de la tôle, que dans la direction transversale correspondant à la direction d'étirage de cette tôle pour constituer la grille.

En jouant sur ces divers paramètres, on peut déterminer une déflection suffisante du flux incident de vapeur pour rendre son parcours horizontal (direction 16) où même légèrement incliné vers le bas (direction 17) dans la zone 12 de séchage disposée au-delà de la grille 11.

Cependant, la perte de charge du dispositif augmente lorsqu'on modifie les paramètres de la grille pour augmenter la déflection.

Il faudra donc choisir des caractéristiques de structure de la grille permettant d'obtenir un flux de vapeur se déplaçant dans une direction proche de l'horizontale dans la zone 12, tout en limitant la perte de charge à une valeur acceptable.

Sur la Fig. 4, on voit une partie de la section horizontale de la zone 12 dans laquelle sont disposées des chicanes 20 constituées par des tôles verticales pliées ou raccordées en constituant des angles dièdres successifs disposés dans un sens ou dans l'autre, voisins de 90°. Les chicanes 20 sont disposées les unes à la suite des autres parallèlement dans la direction longitudinale de l'ensemble de séchage, c'est-à-dire dans la direction horizontale parallèle au panneau 11 constituant la face d'entrée de cet ensemble de séchage. Les chicanes 20 sont disposées de façon à s'interposer sur le parcours de la vapeur 16 à l'intérieur de la zone de séchage 12, suivant une direction pratiquement horizontale.

Au niveau de chacun des angles dièdres à 90° des chicanes, est fixée une gouttière verticale 21, alternativement d'un côté et de l'autre de la chicane 20.

Les sections droites des gouttières 21 sont en forme de rectangles, creuses et ouvertes vers le flux incident de la vapeur 16. Les gouttières 21 permettent d'arrêter les gouttelettes d'eau déposées par la vapeur sur les parois des chicanes et de faire parvenir l'eau ainsi collectée à la partie inférieure de l'ensemble de séchage, dans la zone de récupération 13. Les gouttières 21 sont également responsables de la constitution de zones 23 où la vapeur est en surpression, immédiatement en amont de l'eau 24 collectée par la gouttière 21. Dans cette zone 23, les gouttelettes de liquide et la vapeur ont une composante de vitesse nulle dans le plan horizontal.

Ceci n'a cependant pas d'effet défavorable sur l'écoulement gravitaire du film de liquide 24, puisque le flux de vapeur de direction 16 est, soit horizontal, soit légèrement incliné vers le bas, grâce à la déflection de la tôle en métal déployée 11.

On voit donc qu'un des avantages du dispositif suivant l'invention est de permettre une utilisation d'éléments de séchage comportant des chicanes et des gouttières verticales, dans de très bonnes conditions d'efficacité. Ces avantages sont obtenus grâce à un élément de déflection d'une très grande facilité de réalisation et d'une très bonne résistance, puisqu'il est obtenu à partir d'une tôle par une opération de poinçonnage suivie d'un étirage, sans nécessiter de soudage. Cet élément monobloc présente donc une bien meilleure résistance et une bien meilleure fiabilité qu'un élément assemblé tel qu'un panneau du type persienne à ailettes rapportées.

Sur la Fig. 5, on voit une variante de réalisation de la zone de séchage, les chicanes et les gouttières étant réalisées a partir des mêmes éléments 26 en forme de portions de cylindres à axes verticaux fixés sur des plaques planes verticales 25. Le flux incident de vapeur 16 est dévié par les éléments 26 successifs dont les sections en demi-cercles sont ouvertes vers le flux incident de vapeur. Les éléments 26 constituent également des gouttières de récupération du film d'eau 27 constitué à partir des gouttelettes déposées sur leur surface interne. De la même façon que précédemment, l'écoulement gravitaire du film 27 n'est que très peu gêné ou même facilité par le flux de vapeur 16 dont la direction de déplacement est horizontale ou légèrement inclinée vers le bas.

L'invention ne se limite pas au mode de réalisation qui vient d'être décrit. C'est ainsi qu'on peut imaginer un dispositif de séparation comportant un panneau d'entrée en métal déployé et des dispositifs de séchage (chicanes et gouttières) d'un type différent de ceux qui ont été décrits, les chicanes et les gouttières étant constituées soit par des éléments différents, soit par les mêmes éléments.

On peut imaginer l'utilisation d'une grille en métal déployé ayant des cellules d'une forme différente de la forme en losange qui a été décrite.

Les dimensions de la grille seront définies en fonction de la déflection souhaitabe du flux de vapeur et de la perte de charge acceptable dans les conditions d'utilisation du dispositif.

Enfin, le dispositif suivant l'invention s'applique non seulement aux générateurs de vapeur des réacteurs nucléaires à eau sous pression, mais également à d'autres types de générateurs de vapeur, même à des installations différentes de générateurs de vapeur dans lesquelles on obtient une vapeur humide dont le courant de sortie est ascendant.

**Revendications**

1. Dispositif de séparation d'eau et de vapeur pour le séchage d'une vapeur humide, ce dispositif comprenant des organes d'entrée et de sortie de la vapeur et au moins un ensemble (8) interposé entre les organes d'entrée et de sortie sur le parcours de la vapeur et constitué par des éléments de séchage (20, 21, 25) et par un panneau perforé (11) dont une face ou face d'entrée reçoit la vapeur humide qui, après traversée du panneau perforé (11), débouche dans une zone (12) renfermant les éléments de séchage, ces derniers comprenant des chicanes (20,26) de déviation du flux de vapeur et des gouttières (21, 26) de récupération de l'eau séparée de la vapeur, la disposition des parties du dispositif étant telle que, dans une position d'utilisation du dispositif dans laquelle le panneau perforé (11) est vertical avec l'entrée de vapeur située plus bas que la sortie, les gouttières de récupération (21, 26) sont verticales et situées de façon que leur section droite horizontale présente une partie concave dont la concavité est dirigée vers le panneau perforé (11), le dispositif étant caractérisé par le fait que le panneau perforé (11) est constitué par une grille en métal déployé dont les cellules (14) permettant le passage de la vapeur sont limitées par des lamelles (15) qui, dans la dite position d'utilisation du dispositif, sont inclinées vers le bas dans le sens de traversée de la vapeur de façon que le parcours de cette dernière soit sensiblement horizontal ou légèrement incliné vers le bas au moment où elle entre en contact avec les éléments de séchage (20, 21, 26).

2. Dispositif de séparation d'eau et de vapeur suivant la revendication 1, caractérisé par le fait que la grille en métal déployé (11) comporte des cellules (14) en forme de losanges dont les grandes diagonales sont, dans ladite position d'utilisation, horizontales.

3. Utilisation d'un dispositif de séparation d'eau et de vapeur suivant l'une quelconque des revendications 1 ou 2 pour le séchage de la vapeur humide, dans la partie supérieure (1) d'un générateur de vapeur d'un réacteur nucléaire à eau sous pression.

**Patentansprüche**

1. Trennvorrichtung für Wasser und Dampf zur Trocknung eines feuchten Dampfes mit Ein- und Auslässen für den Dampf und mindestens einer Konstruktion (8) auf dem Weg des Dampfes zwischen den Ein- und Auslässen, bestehend aus Trocknungselementen (20, 21, 26) und einer perforierten Platte (11), deren eine Seite oder Eingangsseite den feuchten Dampf aufnimmt, der nach Durchgang durch die perforierte Platte (11) in eine Zone (12) gelangt, in der sich die Trocknungselemente befinden, die Ablenkungsbleche (20, 26) für den Dampffluss und Auffangrinnen (21, 26) für das aus dem Dampf abgetrennte Wasser umfassen, wobei die Vorrichtungsteile so angeordnet sind, dass, in einer Anwendungsstellung der Vorrichtung, in der die perforierte Platte (11) senkrecht zum Dampfeinlass ist, der sich weiter unten befindet als

der Auslass, die Auffangrinnen (21, 26) senkrecht und so angeordnet sind, dass ihr horizontaler Querschnitt einen konkaven Bereich aufweist, dessen Konkavität zur perforierten Platte(11) gerichtet ist, dadurch gekennzeichnet, dass die perforierte Platte (11) aus einem ausgebreiteten Metallgitter besteht, dessen den Durchgang des Dampfes gestattenden Maschen (14) durch Lamellen (15) begrenzt sind, die, in der angegebenen Anwendungsstellung der Vorrichtung, gegen unten, im Sinn des Durchgangs des Dampfes, geneigt sind, so dass der Weg des Dampfes zum Zeitpunkt, in dem der Dampf mit den Trocknungselementen (20, 21, 26) in Berührung kommt, im wesentlichen horizontal oder leicht nach unten geneigt ist.

2. Trennvorrichtung für Wasser und Dampf nach Anspruch 1, dadurch gekennzeichnet, dass das ausgebreitete Metallgitter (11) Maschen (14) in Form von Rhomben umfasst, deren grosse Diagonalen in der angegebenen Anwendungsstellung horizontal sind.

3. Verwendung der Trennvorrichtung für Wasser und Dampf nach Anspruch 1 oder 2 zur Trocknung von feuchtem Dampf im oberen Teil (1) eines Dampfgenerators eines Druckwasserkernreaktors.

**Claims**

1. A device for separating water and steam for the drying of a moist steam, said device having steam inlet and outlet means and at least an assembly (8) interposed between said inlet and outlet means in the path of the steam and formed by drying elements (20, 21, 25) and by a perforated panel (11) a side of which, or inlet side receives the moist stream which, after having passed through the perforated panel (11), emerges in a zone (12) enclosing the drying elements, these last comprising baffles (20, 26) for deviating the stream of steam and troughs (21, 26) for recovering the water separated from the steam, the arrangement of the parts of the device being such that, in an operational position of the device in which the perforated panel (11) is vertical with the steam inlet places lower than the outlet, the recovering throughs (21, 26) are vertical and placed in such manner that their horizontal cross-sections has a hollow part which faces the perforated panel (11), the device being characterized in that the perforated panel (11) is formed by a grid of expanded metal, the cells (14) of which allowing the passage of the steam are defined by strips (15) which in the said operational position of the device, are downwardly inclined in the direction of the travel of the steam, so that its path is substantially horizontal or slightly downwardly inclined at the moment it comes into contact with the drying elements (20, 21, 26).

2. A device separating water and steam according to claim 1, characterized in that the grid of expanded metal (11) comprises diamond-shaped cells (14) whose large diagonals are horizontal, in the said operational position.

3. Use of a device for separating water and steam according one of claims 1 or 2 for the drying of a moist steam, in the upper part (1) of a steam generator of a pressurized water nuclear reactor.

**FIG.1**

FIG.2

FIG.3

FIG.3A

FIG.4

FIG.5